(19) Europäisches Patentamt / European Patent Office / Office européen des brevets

(11) **EP 4 496 175 A2**

(12) **EUROPEAN PATENT APPLICATION**

(43) Date of publication:
**22.01.2025 Bulletin 2025/04**

(21) Application number: **24189028.4**

(22) Date of filing: **16.07.2024**

(51) International Patent Classification (IPC):
***H02J 7/00*** (2006.01)

(52) Cooperative Patent Classification (CPC):
**H02J 7/0013; H02J 7/007182; H02J 7/007192**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.07.2023 US 202363527269 P**

(71) Applicant: **LG Energy Solution, Ltd.**
**Seoul 07335 (KR)**

(72) Inventors:
• **KUMAR, Kiran**
  **Westborough, 01581 (US)**
• **ZAHAVI, Joseph**
  **Westborough, 01581 (US)**

(74) Representative: **Dentons UK and Middle East LLP**
**One Fleet Place**
**London EC4M 7WS (GB)**

(54) **APPARATUS AND METHOD FOR ENERGY MAXIMIZATION IN A SECONDARY BATTERY SYSTEM**

(57) A battery system includes a plurality of batteries including a plurality of chargeable battery cells, and a bus to which the plurality of batteries are selectively connected in parallel. A battery management system monitors operating limits of the chargeable battery cells of the plurality of batteries, generates a signal indicating that an operating limit of a chargeable battery cell of a battery among the plurality of batteries is being reached for a foldback operation of the battery, and initiates the foldback operation. A controller is configured to generate a signal to disconnect the battery associated with the signal of the battery management system from the bus.

FIG. 3

EP 4 496 175 A2

**Description**

**CROSS-REFERENCE TO RELATED APPLICATION**

This application claims priority to and the benefit of provisional application US 63/527,269 filed on July 17, 2024, the disclosure of which is incorporated herein by reference.

**TECHNICAL FIELD**

The present disclosure relates to secondary battery systems, and, more particularly, to energy maximization in a secondary battery system.

**BACKGROUND**

Secondary batteries are rechargeable batteries unlike primarily batteries, which are usually single use and disposed. Presently, lithium ion batteries are the most commonly used secondary batteries due to their high voltage potential, safety, and commercial viability. Research on secondary batteries is being carried out due to increased demand in electric vehicles and energy storage systems so as to reduce reliance on fossil fuels, to reduce pollution, and to protect the environment.

A battery system will typically have multiple secondary batteries connected in series and/or parallel suitable for charging from a power source and discharging power to a load or a power grid.

However, the battery system, made up of these secondary batteries, over the course of its service life, will be subject to the effects of aging and this manifests itself as capacity degradation. If all the secondary batteries performed and aged at the same rate, their voltage and Current profiles will be identical since they are performing substantially identical power profiles. However, in reality, during the course of a typical lifetime, some secondary batteries will age faster than the others and this will cause the voltage and Current on some secondary batteries to be different from others under similar power profiles. This can cause imbalanced conditions among the secondary batteries that can negatively affect the system's energy capacity beyond that which may be resolved by simply reducing the total capacity by the sum of the individual capacity losses.

Furthermore, during system operation, some secondary batteries may see their temperature increase more than others for various reasons such as uneven cooling distribution or different internal impedances. These secondary batteries having higher than desired temperatures may also impact the system's energy capacity beyond that which may be resolved by the average temperature response during system operation.

In addition, there are conditions which usually result from variations in the manufacturing consistency and quality of the battery components, and not attributed to a function of the system design, which in the normal operation of the battery system, can cause the secondary batteries to exhibit different Current, voltage, and temperature conditions (or variations) while operating in substantially similar environmental and operational conditions. These differences may cause unexpectedly lower discharge and charge capacity and impact system performance.

**SUMMARY**

The present disclosure describes battery systems and methods to maximize system capacity in situations where there are imbalanced conditions among the secondary batteries in the battery system.

In one aspect, the power capacity of the battery system may be maximized by not letting an imbalanced secondary battery in the battery system limit the charge or discharge capacity of the battery system.

One object desired to achieve from the disclosure is an increased power capacity in a battery system that is limited by various imbalanced conditions of secondary batteries in the battery system, and thereby delivering power at a higher capacity and relatively longer period of time.

However, the present disclosure is not limited to achieving the above-described object, and other objects that are not described herein may be achieved by those skilled in the art based on the knowledge obtained from the following descriptions.

According to one aspect, a battery system includes a plurality of batteries including a plurality of chargeable battery cells; a bus to which the plurality of batteries are selectively connected in parallel; a battery management system configured to monitor operating limits of the chargeable battery cells of the plurality of batteries, to generate a signal indicating that an operating limit of a chargeable battery cell of a battery among the plurality of batteries is being reached for a foldback operation of the battery, and to initiate the foldback operation; and a controller configured to generate a signal to disconnect the battery associated with the signal of the battery management system from the bus.

The operating limit may include at least one of a voltage limit and a temperature limit.

The battery management system may include a Current limiting device to disconnect the battery associated with the signal of the battery management system from the bus.

The controller may be configured to determine Current limits of remaining plurality of batteries on the bus; and control to allow for stepped up Current to the remaining plurality of batteries on the bus based on the Current limits of the remaining plurality of batteries not exceeding a maximum allowable Current limit.

The controller may be configured to calculate the stepped up Current to the remaining plurality of batteries on the bus prior to the battery associated with the signal of the battery management system is disconnected from the bus.

The controller may be configured to generate the signal to disconnect the battery from the bus during the foldback operation.

The controller may be configured to generate the signal to disconnect the battery from the bus closer to an end of the foldback operation than a beginning of the foldback operation.

The controller may be configured to monitor the foldback operation and generate the signal to disconnect the battery from the bus towards the end of the foldback operation.

The controller is configured to determine a rate of change of Current during the foldback operation for determining the generation of the signal to disconnect the battery from the bus.

The battery system may include a buffer towards the end of the foldback operation in which a rate of change of Current is decreased.

According to another aspect, a method of controlling a battery system including a plurality of batteries that include a plurality of chargeable battery cells, and a bus to which the plurality of batteries are selectively connected in parallel, the method includes monitoring operating limits of the chargeable battery cells of the plurality of batteries; generating a signal indicating that an operating limit of a chargeable battery cell of a battery among the plurality of batteries is being reached for a foldback operation of the battery; initiating the foldback operation; and disconnecting the battery associated with the signal.

The method may include controlling a Current limiting device to disconnect the battery from the bus.

The method may include determining Current limits of remaining plurality of batteries on the bus; and controlling to allow for stepped up Current to the remaining plurality of batteries on the bus based on the Current limits of the remaining plurality of batteries not exceeding a maximum allowable Current limit.

The method may include calculating the stepped up Current to the remaining plurality of batteries on the bus prior to disconnecting the battery from the bus.

The method may include disconnecting the battery from the bus during the foldback operation.

The method may include disconnecting the battery from the bus closer to an end of the foldback operation than a beginning of the foldback operation.

The method may include monitoring the foldback operation; and disconnecting the battery from the bus towards the end of the foldback operation.

The method may include determining a rate of change of Current during the foldback operation for determining the disconnection of the battery from the bus.

The method may include determining the rate of change at a buffer towards the end of the foldback operation in which a rate of change of Current is decreased.

According to another aspect, a non-transitory computer-readable medium including computer-executable instructions stored therein, which when executed by one or more processors causes the one or more processors to perform a method of controlling a battery system including a plurality of batteries that include a plurality of chargeable battery cells, and a bus to which the plurality of batteries are selectively connected in parallel. The method includes monitoring operating limits of the chargeable battery cells in the plurality of batteries; generating a signal indicating that an operating limit of a chargeable battery cell of a battery among the plurality of batteries is being reached for a foldback operation of the battery; initiating the foldback operation; and disconnecting the battery associated with the signal from the bus.

It should be noted that the technical effects obtainable through the present disclosure are not limited to the above-described effects, and other effects that are not mentioned herein will be clearly understood by those skilled in the art from the following descriptions.

## BRIEF DESCRIPTION OF THE DRAWINGS

The accompanying drawings illustrate exemplary aspects of the present disclosure and, together with the following detailed description, serve to provide further understanding of the technical spirit of the present disclosure. However, the present disclosure is not to be construed as being limited to the drawings.

FIG. 1 is a schematic diagram illustrating an exemplary battery system.
FIG. 2 is a graph showing a time sequence of voltage, state of charge (SOC), and charge Current of the battery cells Cell 1-4 connected in series.

FIG. 3 is a schematic diagram illustrating a battery system according to an aspect of the present disclosure.

FIG. 4 is a schematic diagram illustrating in more detail, a battery module connect and disconnect structure of a battery system according to an aspect of the present disclosure.

FIG. 5 is a schematic diagram illustrating a control system according to an aspect of the present disclosure.

FIG. 6 is a flowchart illustrating a method for controlling a plurality of modules by a controller according to an aspect of the present disclosure.

FIG. 7 is a diagram illustrating module disconnection timing performed by the controller according to an aspect of the present disclosure.

FIG. 8 is a flowchart illustrating another method for controlling a plurality of battery modules by a controller according to another aspect of the present disclosure.

FIG. 9 is a diagram illustrating module disconnection timing performed by the controller according to another aspect of the present disclosure.

FIG. 10 is a flowchart illustrating a method performed by a controller to reconnect the disconnected one or more modules with a bus according to an aspect of the present disclosure.

## DETAILED DESCRIPTION OF THE DISCLOSURE

The present disclosure may be variously changed and have various aspects, and the specific aspects disclosed herein in detail are used to facilitate an understanding of the present disclosure to those skilled in the art.

Therefore, it should be understood that there is no intention to limit the present disclosure to the particular aspects disclosed, and on the contrary, the present disclosure covers all modifications, equivalents, and alternatives falling within the spirit and scope of the present disclosure.

In this application, it should be understood that terms such as "include" or "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

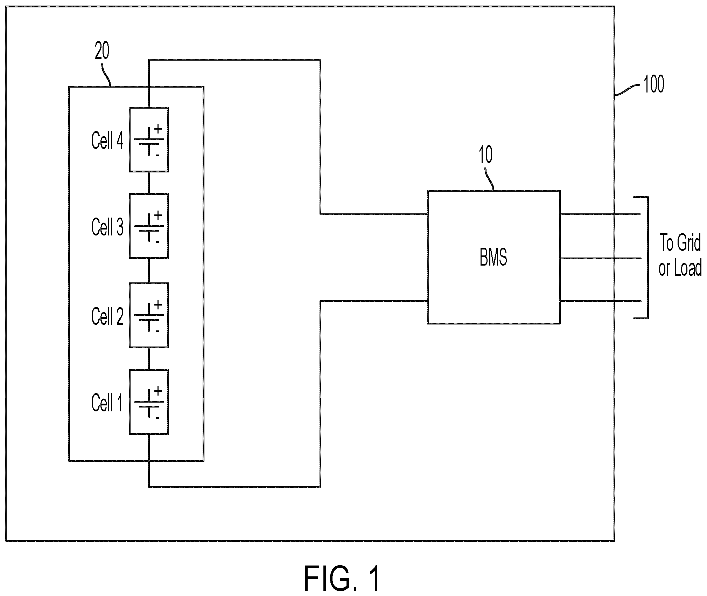

FIG. 1 is a schematic diagram illustrating an exemplary battery system. The battery system 100 includes a battery management system 10 and a battery module 20 that includes a plurality of chargeable battery cells (secondary batteries) Cell 1-4 connected in series. The battery module could be a casing including a plurality of battery cells or just an assembly of battery cells. The exemplary battery system 100 is introduced to describe a foldback operation of the battery system.

A battery management system or BMS is found in electric vehicles, energy storage systems, and electronic devices to manage chargeable battery cell or cells. The battery management system monitors crucial data such as voltage, temperature, and Current of the battery cells, among other things. During charging or discharging, the battery cells are usually monitored at all times. The battery management system usually includes a controller and various sensors that sense the voltage, temperature, and Current of the battery cells, which are then signaled to the controller. The controller may then calculate the state of charge (SOC) and state of health (SOH) of the battery cell or cells, among other things.

In the battery system 100, the battery management system 10 monitors various operating status of the battery cells Cell 1-4. For example, the battery management system 10 may dynamically calculate the charge and discharge Current status of the battery cells Cell 1-4 based on the operating status of the individual cells, and has the ability to control the Current being pushed or pulled through the battery cells Cell 1-4 connected in series. Among the charge and discharge Current status of the battery cells Cell 1-4, the charge Current limit of the battery cells Cell 1-4 is a function of the maximum cell voltage and/or the maximum/minimum temperature of any cell in the battery cells Cell 1-4 connected in series, while the discharge Current limit of the battery cells Cell 1-4 is function of minimum cell voltage and/or maximum/minimum temperature of any cell in in the battery cells Cell 1-4 connected in series. Thus, during an energy storage charging operation, a single cell's maximum voltage limit or maximum/minimum temperature limit may limit the Current allowed in the battery cells Cell 1-4. Conversely, during an energy storage discharging operation, a single cell's minimum cell voltage and/or maximum/minimum temperature may limit the Current discharged by the battery cells Cell 1-4.

When the Current through the battery cells Cell 1-4 is reduced because of a Current limit, it is known as "foldback." During foldback, the battery management system 10 reduces the Current through the battery cells Cell 1-4 in proportion to how close any one cell's voltage and/or temperature is to its maximum/minimum value. This approach is to ensure the safety of the battery cells Cell 1-4 in the battery system 100. Thus, a charge Current limit or a discharge Current limit of a single cell may affect the charging or discharging power capacity of the battery system 10.

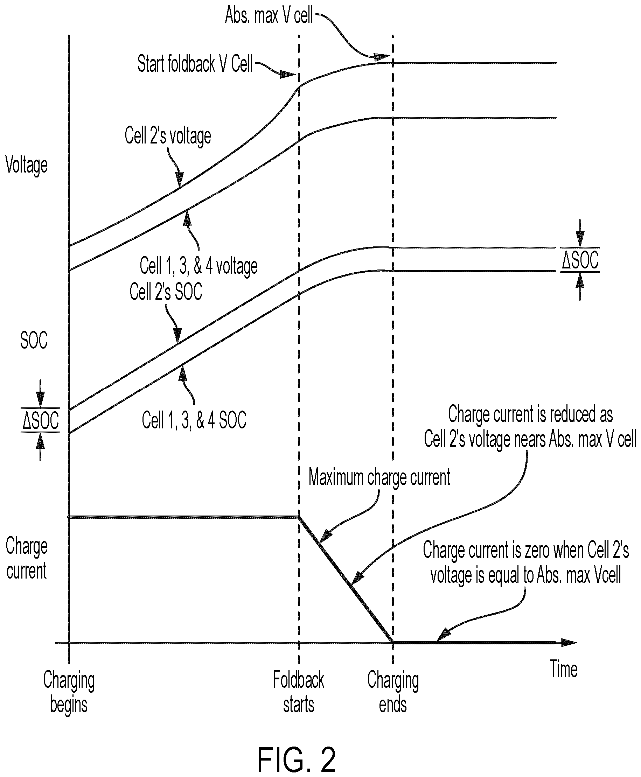

FIG. 2 further illustrates the foldback operation. FIG. 2 is a graph showing a time sequence of voltage, state of charge (SOC), and charge Current of the battery cells Cell 1-4 connected in series. Assuming that the cell Cell 2 has a higher SOC than the cells Cell 1, 3 and 4, this means that the cell Cell 2's voltage will be higher than the other three cells Cell 1, 3, and 4, all other conditions being equal. When the battery management system 10 supplies the charge Current to the cells Cell 1-4, the Current flows through each of the cells identically, because they are connected in series, and correspondingly, each SOC of the cells Cell 1-4 will rise. At some point, the cell Cell 2's voltage will rise to a point close to its maximum voltage value, and the other cells Cell 1, 3, and 4 voltages may not be as close as shown in FIG. 2. The battery management system 10 monitoring the individual cell voltages will determine that the cell Cell 2's voltage is nearing its maximum voltage value, and will initiate the foldback operation that starts to reduce the charge Current to the cells Cell 1-4 connected in series. As a result, the charge Current flowing through the cells Cell 1-4 will decrease, and with it, a decrease in Current through each of cells Cell 1-4 along with the rate of increase of their SOC.

At the point where the cell Cell 2's voltage reaches its maximum voltage value, the battery management system 10 stops the charging process and the charge Current will become zero. Here, the cell Cell 2 is fully charged, while the cells Cell 1, 3, and 4 are not. Thus, the total energy stored, $E_{stored}$, will be less than that if all the cells Cell 1, 2, 3 and 4 were fully charged. That is, the total energy stored, $E_{stored}$ will be:

$$E_{Stored} = E_{Cell}\left(4 - 3\Delta SOC\right)$$

where $E_{cell}$ is the energy capacity that can be stored in a cell, $\Delta SOC$ is the difference between the state of charge of cell Cell 2 and the other three cells Cell 1, 3 and 4 (assuming the other three SOC's are the same).

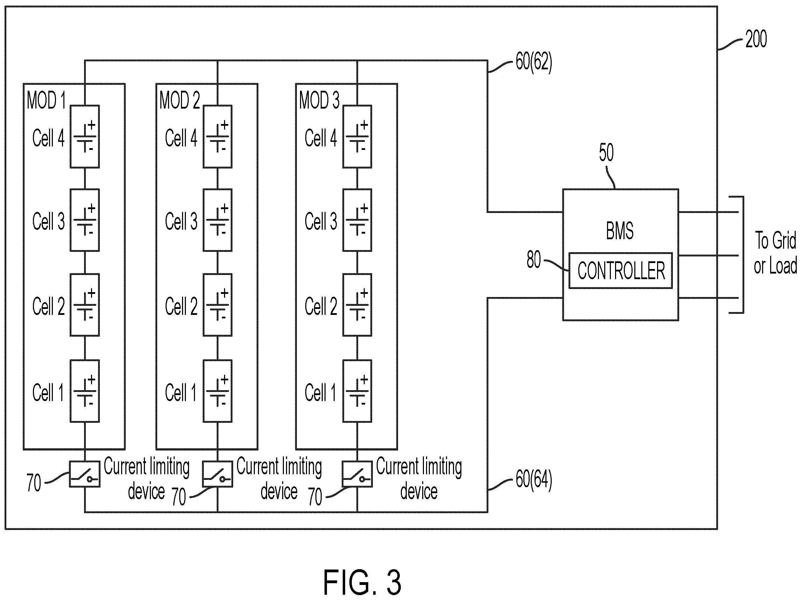

FIG. 3 is a schematic diagram illustrating a battery system according to an aspect of the present disclosure. The battery system 200 includes a battery management system 50 and a plurality of battery modules MOD 1-3, a battery module including a plurality of battery cells Cell 1-4 connected in series. The battery module could be a casing or just an assembly of battery cells. While three battery modules are shown, it is understood that there could be less than or more than three battery modules. A battery pack may refer to a collection/plurality of modules, or in some cases, a collection of cells without any separate modules. A rack may refer to a collection/plurality of modules, or in some cases, a collection of cells without any separate modules. The plurality of battery modules MOD 1-3 are selectively connected in parallel to a bus 60. The bus 60 may include a positive bus 62 and a negative bus 64. The plurality of battery modules MOD 1-3 may be selectively connected to the bus 60 through a Current limiting device 70. The Current limiting device may be a relay, a contactor, a switch, a semiconductor switching device, and the like. In this aspect, a positive end of a battery module is connected to the positive bus 62 and a negative end of the battery module is selectively connected to the negative bus 64 through the Current limiting device. However, in other aspects, the positive end of the battery module may be selectively connected to the positive bus or both the positive end and the negative end of the battery module may be selectively connected to the respective positive bus and the negative bus.

The battery management system 50 is configured to control the Current limiting device 70 to disconnect a battery module from the bus 60 based on a signal of a controller 80. The controller 80 may be part of the battery management system 50 as shown in FIG. 3, or the controller may be external to the battery management system 50. The battery management system 50 is configured to monitor an operating limit of one or more battery cells in a battery module, to generate a signal when an operating limit is being reached for a battery cell requiring a foldback operation, and to initiate the foldback operation. The controller 80 is configured to generate a signal to disconnect the battery module associated with the signal of the battery management system 50, using Current limiting device 70, from the bus 60. The operational limit of a battery cell may be a voltage limit, a temperature limit, or both the voltage limit and the temperature limit of the battery cell during charging or discharging operation.

An operation of the battery system 200 will now be described. Assume that cell Cell 2 of module MOD 2 has a higher SOC than Cells Cell 1, 3 and 4 of module MOD 2 and all other cells in modules MOD 1 and 3. This means MOD 2/Cell 2's voltage will be higher than the voltages of other eleven cells, all other conditions being equal. When the modules MOD 1-3 are being charged by the battery management system 50, Current flows through each of the cells somewhat identically, (assuming that they all are roughly the same capacity, age and temperature). Therefore, each of their SOC's rises at approximately the same rate. At some point, MOD 2/Cell 2's voltage will rise to a point very close to its maximum recommended voltage, and the other cells' voltages will not be as close. The battery management system 50 monitoring the individual cell voltages will determine that MOD 2/Cell 2's voltage is nearing the maximum voltage value, and will initiate a foldback operation to start reducing the charge Current to all the modules MOD 1, 2 and 3.

If left uninterrupted, the Current in each of the modules will decrease, and thereby each of the cell Currents, and with it, the rate of increase of their SOC. Even though the conditions of modules MOD 1 and 3 are well within operating range, the Current to the modules MOD 1, 2, and 3 will depend on the condition of the cell nearest to its maximum voltage limit (i.e., MOD 2/Cell 2).

This approach is to ensure the safety of the battery cells in the battery system 200 so that no cell will ever have its safety limits exceeded. However, this may severely reduce the amount of energy that the battery system can store and deliver to the load or the grid. In this example, the total amount of energy that is not stored when MOD 2/Cell 2 stops the charging process is:

$$E_{Stored} = E_{Cell}\left[12 - \left(\Delta SOC_1 + \Delta SOC_2 + ... + \Delta SOC_{11}\right)\right]$$

where $\Delta SOC_1$ through $\Delta SOC_{11}$ are the differences in SOC between that of the highest charged cell and the other eleven. If the SOC differences average just 1%, the total lost charging energy is about 10% of the total system energy in this example.

While the operating limit thus far described was a voltage limit, a similar situation can occur when any of the cells experience a higher temperature than the others, and if that temperature is close the absolute maximum operating condition of the cell. For instance, during a charge or discharge, if a cell reaches its maximum temperature limit while the other cells have not, a foldback operation may be initiated to reduce the Current in the modules MOD 1, 2 and 3, thereby limiting the total power capacity of the battery system had all cells reached the operating limit at the same time.

According to the configuration of FIG. 3, the battery system 200 may be configured to extend the time during which the discharge or charging power remain within a desired level. This extension of time may be applicable to any battery system which is at any age/fade, i.e., not only at Begining-of-Life(BOL), but at any point in the battery system's life.

As an example, during discharge, the desired level may be a design criteria, where the specification requires a certain power output be maintained. In another example, in many storage sites, the battery system may be required to perform within a specified power output during the entire discharge by contract terms. That is, when the battery system's power curtails due to one or more modules entering foldback operation, then any point thereafter where the battery system's power output has fallen below the specified power output, will not be considered as meeting the contract terms. This same operational criteria applies during charging of battery system, power input shall be maintained within the specified power level per contract and below this power level due to modules entering foldback is considered..

The battery system 200 may be configured such that when the battery management system 50 encounters an operating limit of a MOD/Cell during charging or discharging where a foldback operation is required, the controller 80 is configured to monitor the foldback operation of the module having the MOD/Cell that is reaching the operating limit, disconnect the module from the bus 60, and allow the battery management system 50 to continue to charge or discharge the remaining modules in consideration of the desired power level.

Because the modules are connected to each other in parallel to the bus 60, the Current associated with each module will be relatively constant ratio of the total bus Current. Assuming that each module has the same Current, then the bus Current will be

$$I_{BUS} = I_{MODULE} \cdot N$$

where $N$ is the number of modules connected to the Bus.

Therefore, in this example, the bus Current limit of battery system 200, $CL_{PB}$, will simply be the smallest of any of the module's Current limit times the number of modules connected to bus.

$$CL_{PB} = \min_{n=1}^{N}\left[CL_{Rack(n)}\right] \cdot N$$

During any charge or discharge operation, the battery management system 50 may be calculating what each module's Current limit ($CL_{MOD}$) should be, which could depend on a number of variables. For example, the variables could include its cell Current limit, its cell temperatures and cell voltages. The Current limit is gradually reduced as the control parameters approach their absolute limits.

$$CL_{Rack(n)} = f\left(CL_{\max}, T_{cell}, V_{cell}\right)$$

When the battery management system 50 adjusts the Current limit, $CL_{MOD}$ to less than its maximum allowable Current, $CL_{max}$, then it is said to be "entering foldback." The Current limit $CL_{PB}$ is dominated by the minimum of the Current limits among the Current limits of the modules. Therefore, any module entering foldback will start reducing the $CL_{PB}$. By setting the bus's Current limit to the reduced $CL_{PB}$, the battery management system ensures that each individual module's Current does not exceed the adjusted Current limit.

However, when the adjusted Current limit is reduced to a point close to or equal to the operating Current associated with the desired power level of the battery system, the battery management system 50 disconnects the module causing the foldback operation from the bus 60, and the Current previously running through all the modules prior entering foldback will be distributed to the remaining modules connected to the bus 60.

The redistribution of Current will increase each module's Current, and as more modules are disconnected, more Current will be redistributed. The battery management system 50 should ensure that it does not disconnect any additional modules if the redistributed Current will exceed the remaining modules' Current limits.

In order to maintain the same power, the Current increase per module that are still connected to bus will be

$$I_{Rack\_post} = I_{Rack\_pre} \cdot \frac{N_{pre}}{N_{post}}$$

$$\Delta I_{Rack} = I_{Rack\_pre} \cdot \frac{N_{pre} - N_{post}}{N_{post}}$$

where $N_{pre}$ and $N_{post}$ are the number of connected modules before and after the disconnection of one or more modules.

This formula will be referred to as the "Current formula".

The power delivered or absorbed by the battery system and each module is calculated by

$$Power = I \cdot V_{DC} \text{ where } I = I_{Rack\_post} * N_{post}$$

The battery management system 50 may safely reconnect the disconnected one or more modules to the bus 60 at an appropriate time, for instance when direction of bus Current changes from discharging to charging or vice versa, in order to keep the battery system 200 operating at maximum availability.

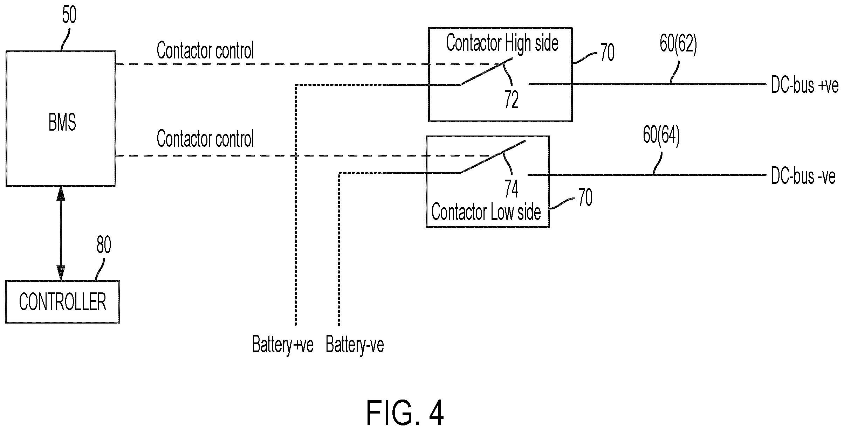

FIG. 4 is a schematic diagram illustrating in more detail, a battery module connect and disconnect structure of a battery system according to an aspect of the present disclosure.

Referring to FIG. 4, a battery module is connected to a bus 60 through a Current limiting device 70. The Current limiting device 70 includes a high side contactor 72 that selectively connects the positive end of the module to the positive bus 62 and a low side contactor 74 that selectively connects the negative end of the module to the negative bus 64. While this aspect shows a high side contactor and a low side contactor, the Current limiting device is not limited to this configuration. For example, the Current limiting device may have only a high side contactor or the Current limiting device may have only a low side contactor. The Current limiting device generally has a configuration suitable to selectively connect and disconnect the module to the bus. The battery management system 50 controls the high side contactor 72 and the low side contactor 74 of the Current limiting device 70. When the battery management system 50 encounters an operating limit of a MOD/Cell during charging or discharging, the battery management system 50 signals to the controller 80 that the operating limit is being reached for a foldback operation. Based on a control method, examples which will be described further below, the controller 80 signals the battery management system 50 to disconnect the module having the MOD/Cell reaching the operating limit from the bus 60. The battery management system 50 signals to the Current limiting device 70 which disconnects the module from the bus 60. In an alternative configuration, the controller 80 signals the Current limiting device 70 to disconnect the module from the bus.

In order to maximize the battery system's realizable capacity, the timing of the module disconnections needs to be considered. For example, disconnecting one or more modules too early reduces the chargeable or dischargeable energy and disconnecting one or more modules too late reduces the battery system's power capability, thereby not maximizing the power capability of the battery system. Thus, a control method of the controller provides for the logic behind when the battery management system disconnects the limiting module or modules in order to maximize the battery system.

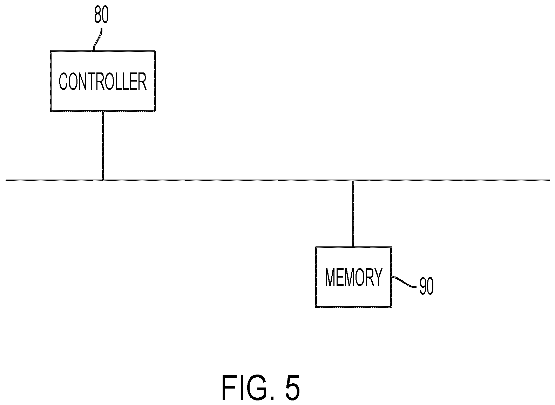

FIG. 5 is a schematic diagram illustrating a control system according to an aspect of the present disclosure. According to FIG. 5, a controller 80 is coupled to a memory 90. The memory 90 stores computer-executable instructions which, when executed by the controller 80, causes the controller to perform a control method to be described below. The controller 80 and the memory 90 may be part of the BMS, or it may be a separate control system. In the event the controller is separate from the BMS, the controller 80 may interface with the BMS by wire or wirelessly. When the BMS encounters an operating limit of a MOD/Cell during charging or discharging, the battery management system 50 signals to the controller 80 that the operating limit is being reached for a foldback operation, and initiates the foldback operation. The controller 80 may continuously or at intervals, receive the adjusted Current limit applied to the modules by the battery management system. The controller 80 uses this information to determine when to disconnect module having the MOD/Cell that is reaching the operating limit based on the control method stored in the memory 90. When the determination is made, the controller may signal the BMS to disconnect the module from the bus, or alternatively, the controller may signal the Current limiting device 70 to disconnect the module from the bus. See FIG. 4.

Examples of the control method stored in the memory 90 will now be described.

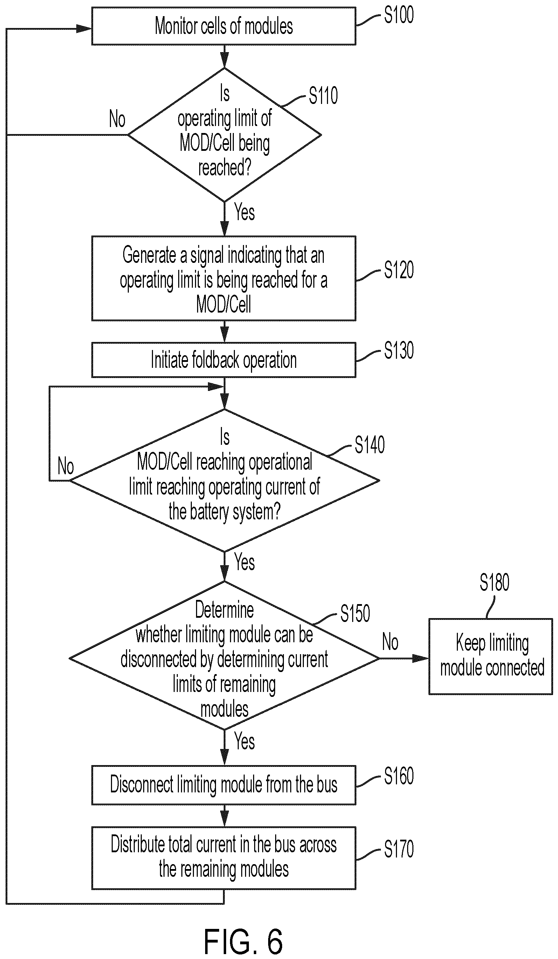

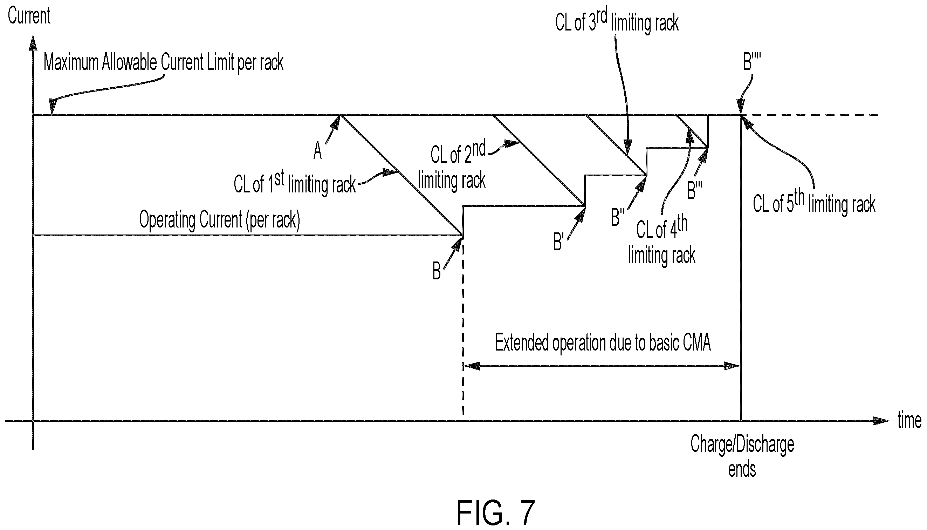

FIG. 6 is a flowchart illustrating a method for controlling a plurality of battery modules by a controller according to an aspect of the present disclosure. FIG. 7 is a diagram illustrating module disconnection timing performed by the controller according to an aspect of the present disclosure. Referring to FIGS. 6 and 7, in step S100, a battery management system monitors cells of the plurality of battery modules connected to a bus of a battery system during charging or discharging operation. In step S110, the battery management system determines whether an operating limit of a MOD/Cell of the plurality of battery modules is being reached. If the battery management system determines that the cells of the plurality of battery modules are operating within the operating limit, the battery management system returns to step 100 to monitor the cells of the plurality of battery modules. Otherwise, if the battery management system determines that a MOD/Cell of the plurality of battery modules is reaching the operational limit, in step S120, the battery management system signals to the controller that the operating limit is being reached for a foldback operation.

In step S130, the battery management system initiates the foldback operation. In step 140, the controller monitors the foldback operation, and in particular, monitors whether the MOD/Cell reaching the operational limit has reached an operating Current for the battery system. When the controller determines that the MOD/Cell reaching the operational limit has reached the operating Current of the battery system, in step S150, the controller determines whether it can disconnect the module with the MOD/Cell reaching the operating limit from the bus, and allowing the remaining connected modules to continue the charging or discharging operation without violating their Current limits. The controller will determine the maximum allowable Current limits of the other connected modules on the bus. If the controller determines that the maximum allowable Current limits of the other connected modules will not be violated, in step S160, the controller sends a signal to the battery management system to disconnect the module with the MOD/Cell reaching the operating limit from the bus. During the foldback operation, the first limiting module is disconnected at point B in FIG. 7. The battery management system signals a Current limiting device to disconnect the module from the bus. Alternatively, the controller signals the Current limiting device to disconnect the module from the bus. In step S170, the battery management system distributes the total Current in the bus across the remaining modules after the module with the MOD/Cell reaching the operating limit is disconnected, for example, per the Current formula described above. The battery management system returns to step 100 to monitor the cells of the remaining modules connected to the bus.

Otherwise, in step S150, if the controller determines that disconnecting the module with the MOD/Cell reaching the operating limit will violate the maximum allowable Current limits of the remaining connected modules, in step S180, the controller signals the battery management system not to disconnect the module with the MOD/Cell reaching the operating limit. Or, the controller may not signal at all, and thereby the battery management system does not disconnect the module. Alternatively, the controller does not signal the Current limiting device to disconnect the module. The battery management system then terminates the charging or discharging operation on completion of the foldback operation.

If the post-disconnection Current in each of the remaining modules is less than the maximum allowable Current limits of the remaining modules, during foldback operation, the first limiting module is disconnected at point B in FIG. 6 (S 160). The controller signals that the first limiting module can be disconnected in which the battery management system signals the Current limiting device of the first limiting module to disconnect.

The operating Current per module will be stepped up after the disconnection of the first limiting module (S170).

Referring to FIG. 7, assuming that a second module thereafter follows the first limiting module by having its operating limit being reached, the battery management system signals to the controller that a foldback operation is to be performed. During foldback operation, when the Current limit of the second limiting module reaches the stepped up operating Current at point B', the second limiting module is disconnected from the bus at point B'. This process continues to be repeated until at point B'" at which a disconnection of another module will cause the operating Current to exceed the maximum allowable Current limit of all the remaining modules. In this case, no more modules are disconnected (S180), and the charging or discharging operation ends.

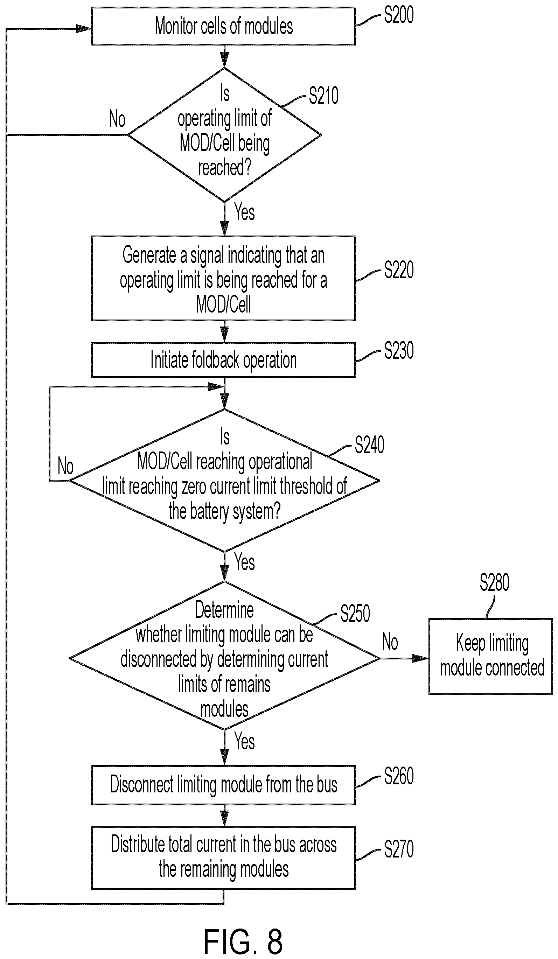

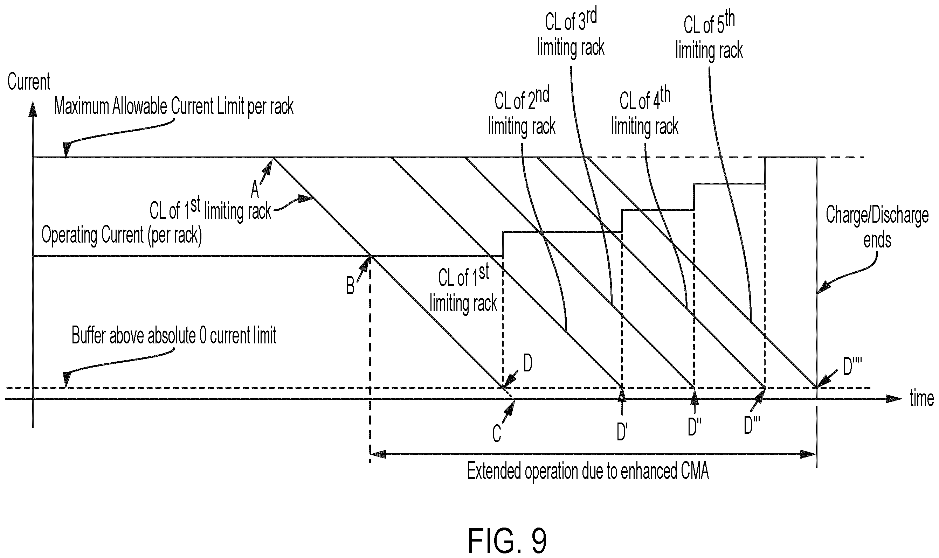

FIG. 8 is a flowchart illustrating another method for controlling a plurality of battery modules by a controller according to another aspect of the present disclosure. FIG. 9 is a diagram illustrating module disconnection timing performed by the controller according to another aspect of the present disclosure.

The diagram of FIG. 9 contemplates performing foldback operation on the plurality of battery modules beyond the operating Current of the plurality of battery modules. Technically, the battery system may be operated with a module connected to the bus all the way until its Current limit reaches zero (See point C in FIG. 9). In this operation, when a MOD/Cell of the plurality of battery modules is entering a foldback operation, the operating Current limit of the battery system is not changed even when the Current limit of the MOD/Cell is decreased or reach zero. The MOD/Cell participates in the charging or discharging until its Current limit reaches zero or close to zero. This is to ensure that the energy from the MOD/Cell under foldback operation is used up until its Current limit reaches zero or near zero, and thus maximizing the overall capacity of the battery system.

Referring to FIGS. 8 and 9, in step S200, a battery management system monitors cells of the plurality of battery modules connected to a bus of a battery system during charging or discharging operation. In step S210, the battery management system determines whether an operating limit of a MOD/Cell of the plurality of battery modules is being reached. If the battery management system determines that the cells of the plurality of battery modules are operating within the operating limit, the battery management system returns to step S200 to monitor the cells of the plurality of battery modules. Otherwise, if the battery management system determines that a MOD/Cell of the plurality of battery modules is reaching the operational limit, in step S220, the battery management system signals to the controller that the operating limit is being reached for a foldback operation.

In step S230, the battery management system initiates the foldback operation. In step S240, the controller monitors the foldback operation, and in particular, monitors whether the MOD/Cell reaching the operational limit is reaching a zero current limit threshold for the battery system.

When the controller determines that the MOD/Cell reaching the operational limit is reaching the zero current limit threshold of the battery system, in step S250, the controller determines whether it can disconnect the module with the MOD/Cell reaching the operating limit from the bus, and allowing the remaining connected modules to continue the charging or discharging operation without violating their Current limits. The controller will determine the maximum allowable Current limits of the other connected modules on the bus. If the controller determines that the maximum allowable Current limits of the other connected modules will not be violated, in step S260, the controller sends a signal to the battery management system to disconnect the module with the MOD/Cell reaching the operating limit from the bus. During the foldback operation, the first limiting module is disconnected at point C in FIG. 9. The battery management system signals a Current limiting device to disconnect the module from the bus. Alternatively, the controller signals the Current limiting device to disconnect the module from the bus. In step S270, the battery management system distributes the total Current in the bus across the remaining modules after the module with the MOD/Cell reaching the operating limit is disconnected, for example, per the Current formula described above. The battery management system returns to step 200 to monitor the cells of the remaining modules connected to the bus.

Otherwise, in step S250, if the controller determines that disconnecting the module with the MOD/Cell reaching the operating limit will violate the maximum allowable Current limits of the remaining connected modules, in step S280, the controller signals the battery management system not to disconnect the module with the MOD/Cell reaching the operating limit. Or, the controller may not signal at all, and thereby the battery management system does not disconnect the module. Alternatively, the controller does not signal the Current limiting device to disconnect the module. The battery management system then terminates the charging or discharging operation on completion of the foldback operation.

The diagram of FIG. 9 contemplates performing foldback operation until the Current limit of the MOD/Cell of the limiting module reaches zero Current limit threshold. However, in various instances, at that point, the operating conditions in the plurality of modules connected to the bus may be at their critical levels, and the battery system may need to take immediate action as the battery system may not be able to operate at absolute zero Current limit. According to another aspect, the foldback operation may be performed until the Current limit reaches a point before point C before the limiting module is disconnected from the bus.

As shown FIG. 9, the foldback operation may be performed until the Current limit of the limiting module is between point D and point C before the limiting module is disconnected from the bus. The controller monitors the foldback operation, and in particular, monitors the Current limit until the MOD/Cell of the limiting module reaches a point where the Current limit is between point D and point C. When the controller determines that the MOD/Cell reaching the operational limit is reaching the Current limit that is between point D and point C, the controller determines whether it can disconnect the limiting module from the bus, and allow the remaining connected modules to continue the charging or discharging operation without violating their Current limits. The controller will determine the maximum allowable Current limits of the other connected modules on the bus. If the controller determines that the maximum allowable Current limits of the other connected modules will not be violated, the controller sends a signal to the battery management system to disconnect the module with the MOD/Cell reaching the operating limit from the bus. During the foldback operation, the limiting module is disconnected at a point between point D and point C. The battery management system signals a Current limiting device to disconnect the module from the bus. Alternatively, the controller signals the Current limiting device to disconnect the module from the bus. The battery management system distributes the total Current in the bus across the remaining modules after the module with the MOD/Cell reaching the operating limit is disconnected, for example, per the Current formula described above. The battery management system then proceeds to monitor the cells of the remaining modules connected to the bus.

Otherwise, if the controller determines that disconnecting the module with the MOD/Cell reaching the operating limit will violate the maximum allowable Current limits of the remaining connected modules, the controller signals the battery management system not to disconnect the module with the MOD/Cell reaching the operating limit. Or, the controller may not signal at all, and thereby the battery management system does not disconnect the module. Alternatively, the controller does not signal the Current limiting device to disconnect the module.

In the example shown in FIG. 9, a number of modules are disconnected until the remaining modules are not be able to support the charging or discharging operation. According to FIG. 9, that point is point D, where any further disconnection will result in the remaining modules exceeding the maximum allowable current limit, and the charging or discharging operation will be brought to an end.

In should be noted that while FIG. 9 shows a limiting module disconnected between point D and point C, where point D is close to the absolute zero Current limit, in certain design criteria, the limiting module may be disconnected further away from the absolute zero Current limit. For instance, the limiting module may be disconnected between point B and point D. In another design criteria, the limiting module may be disconnected between point A and point B.

In the case of disconnecting the limiting module between point D and point C, it may be that there be enough time to disconnect a module before it reaches its zero Current limit threshold. According to this aspect, the controller may monitor a rate of change of the Current limit over time. The rate of change of the Current limit may allow the controller to predict when the Current limit will reach absolute zero Current limit, and therefore determine when the limiting module needs to be disconnected with the bus.

As shown in FIG. 9, a buffer is built above the absolute zero Current limit, in which the rate of change of the Current limit gradually decreases as the Current limit approaches its absolute zero limit. An example of a gradual rate change over time may be seen in FIG. 2 corresponding to a charging operation. As can be seen, the rate of change of the charge Current over time is gradual as the charge Current approaches absolute maximum voltage.

Referring to FIG. 9, the controller monitors the rate of change of the Current limit until the rate of change is equal to or less than a predetermined rate of change. The controller will then determine that the limiting module is reaching absolute zero Current limit which would reduce the battery system's ability to operate in its capacity, and disconnect the limiting module from the bus.

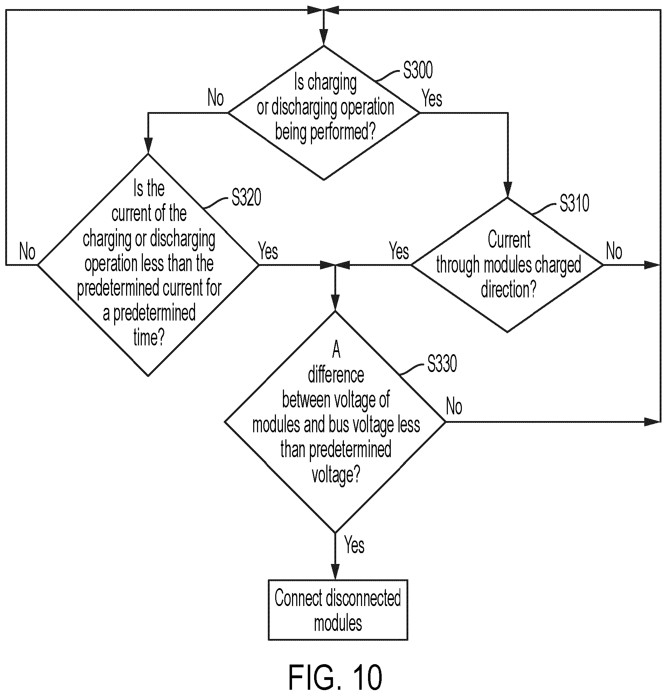

FIG. 10 is a flowchart illustrating a method performed by a controller to reconnect the disconnected one or more modules with a bus according to an aspect of the present disclosure.

In step 300, the controller determines whether a charging or discharging operation being performed by the battery system is greater than a predetermined Current based on a design criteria. If a charging or discharging operation is being performed, in step 310, the controller determines whether Current through the modules has changed direction since the one or more modules were disconnected. If the Current direction through the modules has not changed, the controller returns to step 300 to monitor the charging or discharging operation of the battery system.

Otherwise, the controller proceeds to step 330 where the controller determines whether a difference between a voltage of the modules and the bus voltage is less than a predetermined voltage based on a design criteria. If the difference in voltage is less than the predetermined voltage, the controller proceeds to step 340 where the controller connects the disconnected one or more modules to the bus. Otherwise, the controller returns to step 300.

Returning to step 300, if the charging or discharging operation being performed by the battery system is less than the predetermined Current, the controller proceeds to step 320, where the controller determines if the Current of the charging or discharging operation has been less the predetermined Current for a predetermined time based on a design criteria. If the Current has been less the predetermined Current for a predetermined time, the controller proceeds to step 330 to perform the method described above. Otherwise, the controller returns to step 300.

Although methods have been described on the basis of a flowchart in which steps or blocks are listed in sequence in the above-described aspects, the steps of the present disclosure are not limited to a certain order, and a certain step may be performed in a different step or in a different order or concurrently with respect to that described above. Further, it will be understood by those ordinary skilled in the art that the steps of the flowcharts are not exclusive, and another step may be included therein or one or more steps in the flowchart may be deleted without exerting an influence on the scope of the present disclosure.

When the aspects of the present disclosure are implemented by software, the aforementioned method may be implemented by instructions that are stored in a memory and executed by a controller. The memory may be installed inside or outside the controller and may be connected to the controller via various well-known means. The controller may include Application-Specific Integrated Circuit (ASIC), other chipsets, a logical circuit, and/or an electronic processor. The memory may include a Read-Only Memory (ROM), a Random Access Memory (RAM), a flash memory, a memory card, a storage medium, and/or other storage device.

In the above, the present disclosure has been described in more detail through the drawings and aspects. However, the configurations described in the drawings or the aspects in the specification are merely aspects of the present disclosure and do not represent all the technical ideas of the present disclosure. Thus, it is to be understood that there may be various equivalents and variations in place of them at the time of filing the present application which are encompassed by the claims.

**Claims**

1.  A battery system comprising:

    a plurality of batteries including a plurality of chargeable battery cells;
    a bus to which the plurality of batteries are selectively connected in parallel;
    a battery management system configured to monitor operating limits of the chargeable battery cells of the plurality of batteries, to generate a signal indicating that an operating limit of a chargeable battery cell of a battery among the plurality of batteries is being reached for a foldback operation of the battery, and to initiate the foldback operation; and
    a controller configured to generate a signal to disconnect the battery associated with the signal of the battery management system from the bus.

2.  The battery system of claim 1, wherein the operating limit includes at least one of a voltage limit and a temperature limit.

3. The battery system of claim 1, comprising a Current limiting device to disconnect the battery associated with the signal of the battery management system from the bus.

4. The battery system of claim 1, wherein the controller is configured to:

   determine Current limits of remaining plurality of batteries on the bus; and
   control to allow for stepped up Current to the remaining plurality of batteries on the bus based on the Current limits of the remaining plurality of batteries not exceeding a maximum allowable Current limit.

5. The battery system of claim 4, wherein the controller is configured to calculate the stepped up Current to the remaining plurality of batteries on the bus prior to the battery associated with the signal of the battery management system is disconnected from the bus.

6. The battery system of claim 1, wherein the controller is configured to generate the signal to disconnect the battery from the bus during the foldback operation.

7. The battery system of claim 6, wherein the controller is configured to generate the signal to disconnect the battery from the bus closer to an end of the foldback operation than a beginning of the foldback operation.

8. The battery system of claim 7, wherein the controller is configured to monitor the foldback operation and generate the signal to disconnect the battery from the bus towards the end of the foldback operation.

9. The battery system of claim 8, wherein the controller is configured to determine a rate of change of Current during the foldback operation for determining the generation of the signal to disconnect the battery from the bus.

10. The battery system of claim 9, comprising a buffer towards the end of the foldback operation in which a rate of change of Current is decreased.

11. A method of controlling a battery system including a plurality of batteries that include a plurality of chargeable battery cells, and a bus to which the plurality of batteries are selectively connected in parallel, the method comprising:

   monitoring operating limits of the chargeable battery cells in the plurality of batteries;
   generating a signal indicating that an operating limit of a chargeable battery cell of a battery among the plurality of batteries is being reached for a foldback operation of the battery;
   initiating the foldback operation; and
   disconnecting the battery associated with the signal from the bus.

12. The method of claim 11, comprises controlling a Current limiting device to disconnect the battery from the bus.

13. The method of claim 11, comprises:

   determining Current limits of remaining plurality of batteries on the bus; and
   controlling to allow for stepped up Current to the remaining plurality of batteries on the bus based on the Current limits of the remaining plurality of batteries not exceeding a maximum allowable Current limit.

14. The method of claim 13, comprises calculating the stepped up Current to the remaining plurality of batteries on the bus prior to disconnecting the battery from the bus.

15. The method of claim 11, comprises disconnecting the battery from the bus during the foldback operation.

16. The method of claim 15, comprises disconnecting the battery from the bus closer to an end of the foldback operation than a beginning of the foldback operation.

17. The method of claim 16, comprising:

   monitoring the foldback operation; and
   disconnecting the battery from the bus towards the end of the foldback operation.

**18.** The method of claim 17, comprises determining a rate of change of Current during the foldback operation for determining the disconnection of the battery from the bus.

**19.** The method of claim 18, comprises determining the rate of change at a buffer towards the end of the foldback operation in which a rate of change of Current is decreased.

**20.** A non-transitory computer-readable medium including computer-executable instructions stored therein, which when executed by one or more processors causes the one or more processors to perform a method of controlling a battery system including a plurality of batteries that include a plurality of chargeable battery cells, and a bus to which the plurality of batteries are selectively connected in parallel, the method comprising:

monitoring operating limits of the chargeable battery cells in the plurality of batteries;
generating a signal indicating that an operating limit of a chargeable battery cell of a battery among the plurality of batteries is being reached for a foldback operation of the battery;
initiating the foldback operation; and
disconnecting the battery associated with the signal from the bus.

100

To Grid or Load

10

BMS

20

Cell 4

Cell 3

Cell 2

Cell 1

FIG. 1

FIG. 2

FIG. 3

EP 4 496 175 A2

EP 4 496 175 A2

FIG. 4

80

CONTROLLER

MEMORY 90

FIG. 5

Monitor cells of modules — S100

Is operating limit of MOD/Cell being reached? — S110

No

Yes

Generate a signal indicating that an operating limit is being reached for a MOD/Cell — S120

Initiate foldback operation — S130

Is MOD/Cell reaching operational limit reaching operating current of the battery system? — S140

No

Yes

Determine whether limiting module can be disconnected by determining current limits of remaining modules — S150

No → Keep limiting module connected — S180

Yes

Disconnect limiting module from the bus — S160

Distribute total current in the bus across the remaining modules — S170

FIG. 6

FIG. 7

Monitor cells of modules — S200

Is operating limit of MOD/Cell being reached? — S210

No

Yes

Generate a signal indicating that an operating limit is being reached for a MOD/Cell — S220

Initiate foldback operation — S230

Is MOD/Cell reaching operational limit reaching zero current limit threshold of the battery system? — S240

No

Yes

Determine whether limiting module can be disconnected by determining current limits of remains modules — S250

No

S280

Keep limiting module connected

Yes

Disconnect limiting module from the bus — S260

Distribute total current in the bus across the remaining modules — S270

FIG. 8

Current

Maximum Allowable Current Limit per rack

CL of 1st limiting rack
Operating Current (per rack)

Buffer above absolute 0 current limit

CL of 5th limiting rack

CL of 4th limiting rack

CL of 3rd limiting rack

CL of 2nd limiting rack

CL of 1st limiting rack

Charge/Discharge ends

time

A

B

C

D

D'

D''

D'''

D''''

Extended operation due to enhanced CMA

FIG. 9

Is charging or discharging operation being performed? — S300
- No
- Yes

Is the current of the charging or discharging operation less than the predetermined current for a predetermined time? — S320
- No
- Yes

Current through modules charged direction? — S310
- Yes
- No

A difference between voltage of modules and bus voltage less than predetermined voltage? — S330
- Yes
- No

Connect disconnected modules

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63527269 B